# EUROPÄISCHE PATENTANMELDUNG

(11) **EP 4 111 846 A1**
(43) Veröffentlichungstag der Anmeldung: **04.01.2023**
(21) Anmeldenummer: 22180261.4
(22) Anmeldetag: 21.06.2022
(51) Int. Cl.: A01D 41/127, A01D 45/02, A01D 41/14, A01D 57/02, A01D 61/00

(54) **VERFAHREN UND STEUERGERÄT ZUM BETREIBEN EINER LANDWIRTSCHAFTLICHEN ERNTEMASCHINE SOWIE LANDWIRTSCHAFTLICHE ERNTEMASCHINE**

(30) Priorität: 29.06.2021 DE 102021116753
(71) Anmelder: CLAAS Saulgau GmbH, 88348 Bad Saulgau (DE)
(72) Erfinder: König, Christian, 88094 Oberteuringen (DE); Rothmund, Stefan, 88367 Hohentengen (DE); Wälder, Florian, 72517 Sigmaringendorf (DE); Pollklas, Manfred, 33378 Rheda-Wiedenbrück (DE); Maucher, Hubert, 88410 Bad Wurzach (DE); Gernert, Siegfried, 88339 Bad Waldsee-Mittelurbach (DE); Kaufmann, Christoph, 88367 Hohentengen (DE)

(57) **Zusammenfassung**

Verfahren zum Betreiben einer landwirtschaftlichen Erntemaschine (1), wobei die landwirtschaftliche Erntemaschine (1) ein Vorsatzgerät (2) aufweist, wobei das Vorsatzgerät (2) einen Aufnahmeförderer (7) aufweist, der mit einer definierten ersten Drehzahl angetrieben wird, wobei das Vorsatzgerät (2) einen Abgabeförderer (8) aufweist, der mit einer definierten zweiten Drehzahl angetrieben wird, wobei die Erntemaschine (1) ein Einzugswerk (4) mit Einzugswalzen (5, 6) aufweist, die mit einer definierten dritten Drehzahl angetrieben werden. Die zweite Drehzahl, mit welcher der Abgabeförderer (8) angetrieben wird, wird abhängig von der dritten Drehzahl, mit welcher die Einzugswalzen (5, 6) angetrieben werden, und ferner abhängig der Fahrgeschwindigkeit der landwirtschaftlichen Erntemaschine (1) bestimmt.

## Beschreibung

Die Erfindung betrifft ein Verfahren und ein Steuergerät zum Betreiben einer landwirtschaftlichen Erntemaschine und eine landwirtschaftliche Erntemaschine.

Aus EP 2 281 434 B1 ist eine landwirtschaftliche Erntemaschine mit einem Vorsatzgerät bekannt. Das Vorsatzgerät verfügt über einen Aufnahmeförderer, der als Aufsammeleinrichtung bezeichnet ist. Ferner verfügt das Vorsatzgerät über einen Abgabeförderer, der als Querfördereinrichtung bezeichnet ist. Die Erntemaschine verfügt über ein Einzugswerk mit Einzugswalzen.

Es ist bekannt, dass im Betrieb der landwirtschaftlichen Erntemaschinen der Aufnahmeförderer mit einer ersten Drehzahl, der Abgabeförderer mit einer zweiten Drehzahl und die Einzugswalzen mit einer dritten Drehzahl angetrieben werden.

Aus EP 1 609 351 B1 ist eine weitere landwirtschaftliche Erntemaschine mit einem Vorsatzgerät bekannt. Auch hier verfügt das Vorsatzgerät über einen Aufnahmeförderer und einen Abgabeförderer sowie die Erntemaschine über ein Einzugswerk mit Einzugswalzen. Der Aufnahmeförderer wird mit einer ersten Geschwindigkeit, der Abgabeförderer mit einer zweiten Geschwindigkeit und die Einzugswalzen mit einer dritten Geschwindigkeit angetrieben. Nach EP 1 609 351 B1 ist die zweite Geschwindigkeit, mit welcher der Abgabeförderer angetrieben wird, von der ersten Geschwindigkeit, mit welcher der Aufnahmeförderer angetrieben wird, und von der dritten Geschwindigkeit, mit welcher die Einzugswalzen angetrieben werden, abhängig.

Es ist von Bedeutung, während des Betriebs einen optimalen Gutfluss ausgehend vom Aufnahmeförderer über den Abgabeförderer in Richtung auf das Einzugswerk zu gewährleisten. Dies ist bislang nicht in allen Betriebssituationen der landwirtschaftlichen Erntemaschine möglich.

Hiervon ausgehend liegt der vorliegenden Erfindung die Aufgabe zugrunde, ein neuartiges Verfahren und Steuergerät zum Betreiben einer landwirtschaftlichen Erntemaschine und eine landwirtschaftliche Erntemaschine mit einem solchen Steuerungssystem zu schaffen.

Diese Aufgabe wird durch ein Verfahren zum Betreiben einer landwirtschaftlichen Erntemaschine nach Patentanspruch 1 gelöst.

Erfindungsgemäß wird die zweite Drehzahl, mit welcher der Abgabeförderer angetrieben wird, abhängig von der dritten Drehzahl, mit welcher die Einzugswalzen angetrieben werden, sowie ferner abhängig von der Fahrgeschwindigkeit der landwirtschaftlichen Erntemaschine bestimmt.

Vorzugsweise wird die erste Drehzahl, mit welcher der Aufnahmeförderer angetrieben wird, abhängig von einer Fahrgeschwindigkeit der landwirtschaftlichen Erntemaschine bestimmt.

Die zweite Drehzahl, mit welcher der Abgabeförderer angetrieben wird, wird einerseits abhängig von der Drehzahl ermittelt, mit welcher die Einzugswalzen angetrieben werden, ferner abhängig von der Fahrgeschwindigkeit der landwirtschaftlichen Erntemaschine.

So kann in allen Betriebsbedingungen, und zwar bei allen möglichen Fahrgeschwindigkeiten der Erntemaschine, ein optimaler Gutfluss, ausgehend vom Aufnahmeförderer über den Abgabeförderer in Richtung auf das Einzugswerk gewährleistet werden.

Vorzugsweise ist die zweite Drehzahl, mit welcher der Abgabeförderer angetrieben wird, umso größer, je größer die dritte Drehzahl ist, mit welcher die Einzugswalzen angetrieben werden. Ferner ist die zweite Drehzahl, mit welcher der Abgabeförderer angetrieben wird, umso größer, je größer die Fahrgeschwindigkeit der landwirtschaftlichen Erntemaschine ist. Dies ist für einen optimalen Gutfluss besonders bevorzugt.

Vorzugsweise wird die zweite Drehzahl, mit welcher der Abgabeförderer angetrieben wird, über eine von der dritten Drehzahl abhängigen Funktion oder Kennlinie bestimmt, wobei der Funktion oder Kennlinie abhängig von der Fahrgeschwindigkeit der landwirtschaftlichen Erntemaschine ein Offsetwert, insbesondere ein stufenloser Offsetwert, überlagert wird. Auch diese Details sind bevorzugt, um einen optimalen Gutfluss, ausgehend vom Aufnahmeförderer über den Abgabeförderer in Richtung auf das Einzugswerk bei allen Fahrgeschwindigkeiten der landwirtschaftlichen Erntemaschine zu gewährleisten.

Das Steuergerät ist in Patentanspruch 7 und die landwirtschaftliche Erntemaschine ist in Patentanspruch 9 definiert.

Bevorzugte Weiterbildungen der Erfindung ergeben sich aus den Unteransprüchen und der nachfolgenden Beschreibung.

Ausführungsbeispiele der Erfindung werden, ohne hierauf beschränkt zu sein, an Hand der Zeichnung näher erläutert. Dabei zeigt:
- Fig. 1: einen Ausschnitt aus einer landwirtschaftlichen Erntemaschine;
- Fig. 2: ein Diagramm zur Verdeutlichung der Erfindung.

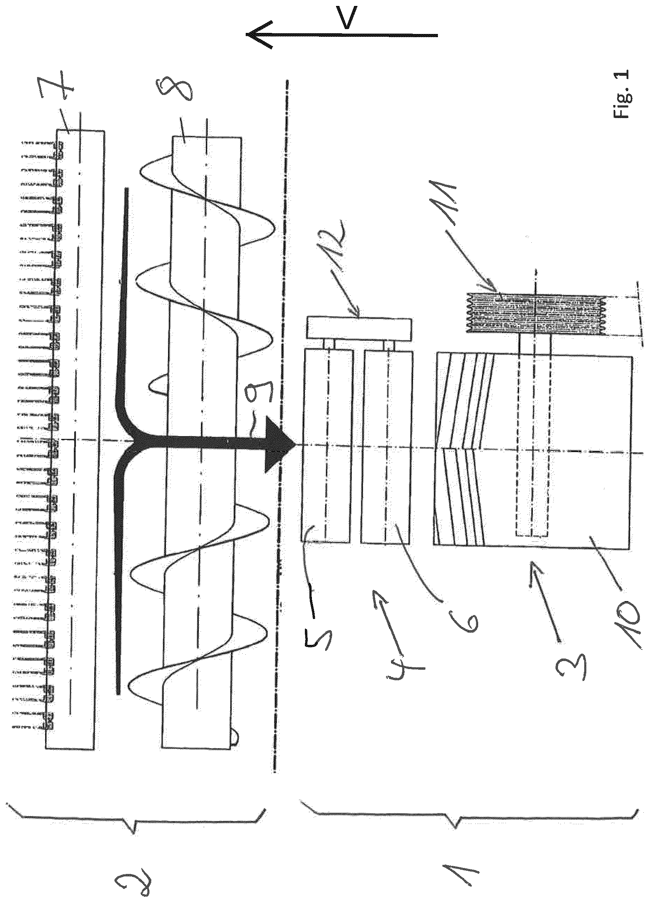

Fig. 1 zeigt einen Ausschnitt aus einer landwirtschaftlichen Erntemaschine 1, die ein Vorsatzgerät 2 trägt.

Bei der landwirtschaftlichen Erntemaschine 1 handelt es sich im gezeigten Ausführungsbeispiel um einen Feldhäcksler, der über ein Häckselwerk 3 und ein dem Häckselwerk 3 in Gutflussrichtung gesehen vorgelagertes Einzugswerk 4 verfügt. Vom Einzugswerk 4 sind Einzugswalzen 5, 6 gezeigt.

Das Vorsatzgerät 2 verfügt über einen Aufnahmeförderer 7 sowie über einen Abgabeförderer 8.

Beim Aufnahmeförderer 7 handelt es sich im gezeigten Ausführungsbeispiel um eine Aufsammeleinrichtung, beim Abgabeförderer 8 um eine Querfördereinrichtung, nämlich einen Schneckenförderer - teilweise auch als Querförderschnecke bezeichnet.

Über den Aufnahmeförderer 7 kann Erntegut von einem Boden aufgenommen und dem Abgabeförderer 8 zugeführt werden, welcher das Erntegut zur Mitte fördert und dem Einzugswerk 4 zuführt. Die Gutflussrichtung des Ernteguts im Bereich des Vorsatzgeräts 2 sowie die Übergabe des Ernteguts vom Vorsatzgerät 2 in Richtung auf das Einzugswerk 4 ist in Fig. 1 durch einen Pfeil 9 dargestellt.

Im Betrieb wird das Häckselwerk 3, nämlich eine Häckseltrommel 10 desselben, über einen Riementrieb 11 mit einer definierten - vorzugsweise etwa konstanten - Drehzahl angetrieben. Ferner werden die Einzugswalzen 5, 6 des Einzugswerks 4 mit einer definierten Drehzahl angetrieben, wobei die Einzugswalzen 5, 6 über ein Getriebe 12 gekoppelt sind und mit weiteren - nicht dargestellten - Einzugswalzen in allgemein bekannter Weise zusammenwirken. Ferner werden Aufnahmeförderer 7 und Abgabeförderer 8 des Vorsatzgeräts 2 während des Betriebs der landwirtschaftlichen Erntemaschine mit einer definierten Drehzahl angetrieben.

Diejenige Drehzahl, mit welcher der Aufnahmeförderer 7 des Vorsatzgeräts 2 betrieben wird, wird als erste Drehzahl bezeichnet. Diejenige Drehzahl, mit welcher der Abgabeförderer 8 des Vorsatzgeräts 2 betrieben wird, wird als zweite Drehzahl bezeichnet. Diejenige Drehzahl, mit welcher die Einzugswalzen 5, 6 des Einzugswerks 4 angetrieben werden, wird als dritte Drehzahl bezeichnet.

Je schneller die Einzugswalzen 5, 6 angetrieben werden, desto größer ist die Schnittlänge im Häckselwerk 3. Je langsamer hingegen die Einzugswalzen 5, 6 angetrieben werden, desto kürzer ist die Schnittlänge im Häckselwerk 3.

Um nun einen optimalen Gutfluss ausgehend von dem Aufnahmeförderer 7 des Vorsatzgeräts 2 über den Abgabeförderer 8 des Vorsatzgeräts 2 in Richtung auf das Häckselwerk 3 über das Einzugswerks 4 zu gewährleisten, ist vorgesehen, dass die erste Drehzahl, mit welcher der Aufnahmeförderer 7 des Vorsatzgeräts 2 angetrieben wird, abhängig von einer Fahrgeschwindigkeit der landwirtschaftlichen Erntemaschine 1 bestimmt wird.

Je größer die Fahrgeschwindigkeit der landwirtschaftlichen Erntemaschine ist, desto größer ist die erste Drehzahl, mit welcher der Aufnahmeförderer 7 angetrieben wird. Dies ermöglicht für alle Fahrgeschwindigkeiten eine optimale Aufnahme von Erntegut über den Aufnahmeförderer 7.

Ferner ist vorgesehen, die zweite Drehzahl, mit welcher der Abgabeförderer 8 angetrieben wird, einerseits abhängig von der dritten Drehzahl, mit welcher die Einzugswalzen 5, 6 angetrieben werden, und andererseits abhängig von der Fahrgeschwindigkeit der landwirtschaftlichen Erntemaschine 1 zu bestimmen.

Die zweite Drehzahl, mit welcher der Abgabeförderer 8 angetrieben wird, ist dabei umso größer, je größer die dritte Drehzahl ist, mit welcher die Einzugswalzen angetrieben werden. Ferner ist die zweite Drehzahl, mit welcher der Abgabeförderer 8 des Vorsatzgeräts 2 angetrieben wird, umso größer, je größer die Fahrgeschwindigkeit der landwirtschaftlichen Erntemaschine 1 ist.

Mit der Erfindung kann ein gleichmäßiger, optimaler Gutfluss im Vorsatzgerät 2 und bei der Übergabe vom Vorsatzgerät 2 auf die Erntemaschine 1 gewährleistet werden. Dies erfolgt vollautomatisch. Die Gefahr von Stopfern im Gutfluss wird reduziert.

Die zweite Drehzahl, mit welcher der Abgabeförderer 8 betrieben wird, wird über eine von der dritten Drehzahl, mit welcher die Einzugswalzen 5, 6 betrieben werden, abhängigen Funktion oder Kennlinie 13 bestimmt. Dieser Funktion oder Kennlinie 13 wird dabei abhängig von der Fahrgeschwindigkeit der landwirtschaftlichen Erntemaschine 1 ein Offsetwert überlagert, insbesondere ein stufenloser oder ein sich kontinuierlich verändernder Offsetwert. Der Offsetwert ist dabei von der Fahrgeschwindigkeit der landwirtschaftlichen Erntemaschine abhängig.

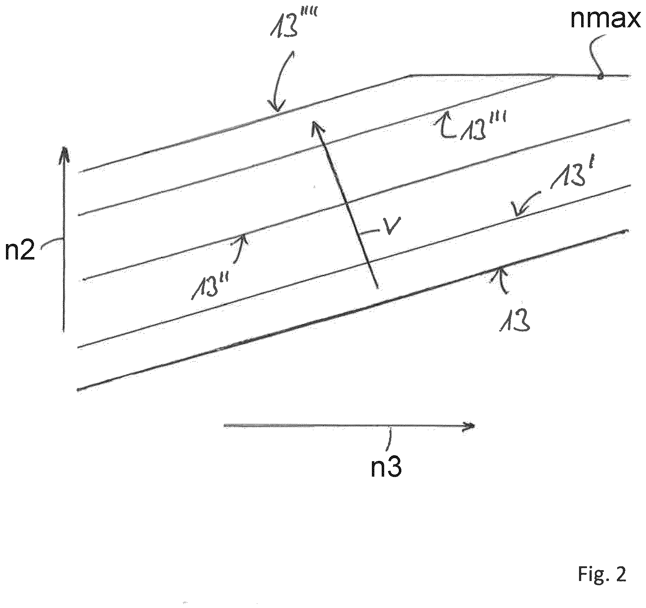

Fig. 2 visualisiert mit einem Diagramm die Vorgehensweise zur Ermittlung der zweiten Drehzahl, mit welcher der Abgabeförderer 8 angetrieben wird. In Fig. 2 ist auf der X-Achse die dritte Drehzahl n3 aufgetragen, mit welcher die Einzugswalzen 5, 6 des Einzugswerks 4 angetrieben werden. Auf der Y-Achse ist die Drehzahl n2 aufgetragen, mit welcher der Abgabeförderer 8 angetrieben wird. Eine Kennlinie 13 visualisiert in Fig. 2 die Abhängigkeit der zweiten Drehzahl n2, mit welcher der Abgabeförderer 8 angetrieben wird, von der dritten Drehzahl n3, mit welcher die Einzugswalzen 5, 6 angetrieben werden.

Im Beispiel der Fig. 2 besteht eine lineare Abhängigkeit zwischen der zweiten Drehzahl n2 und der dritten Drehzahl n3, wobei die zweite Drehzahl n2 umso größer ist, je größer die dritte Drehzahl n3 ist.

In Fig. 2 ist dargestellt, dass abhängig von der Fahrgeschwindigkeit V der landwirtschaftlichen Erntemaschine dieser Kennlinie 13 ein Offsetwert überlagert wird. In Fig. 2 wird die Kennlinie 13, die für eine stillstehende landwirtschaftliche Erntemaschine 1 gültig ist, mit zunehmender Fahrgeschwindigkeit V parallel verschoben, und zwar derart, dass mit zunehmender Fahrgeschwindigkeit V der landwirtschaftlichen Erntemaschine 1 die zweite Drehzahl n2 größer wird.

So zeigt Fig. 2 neben der Kennlinie 13 für eine stillstehende landwirtschaftliche Erntemaschine parallel verschobene Kennlinien 13′, 13ʺ, 13‴ und 13"", wobei die Kennlinie 13' zum Beispiel für eine Fahrgeschwindigkeit von 7 km/h, die Kennlinie 13" zum Beispiel für eine Fahrgeschwindigkeit von 10 km/h, die Kennlinie 13‴ zum Beispiel für eine Fahrgeschwindigkeit von 13 km/h und die Kennlinie 13ʺʺ zum Beispiel für eine Fahrgeschwindigkeit von 15 km/h der landwirtschaftlichen Erntemaschine 1 gültig ist.

Der Offsetwert, welcher also der Kennlinie 13 überlagert wird, ist von der Fahrgeschwindigkeit V der landwirtschaftlichen Erntemaschine abhängig.

Die Überlagerung des Offsetwerts erfolgt dabei vorzugsweise stufenlos, erhöht die Drehzahl n2 mit zunehmender Fahrgeschwindigkeit also vorzugsweise nicht in diskreten Schritten, sondern kontinuierlich. Es ist jedoch alternativ auch möglich, für unterschiedliche Geschwindigkeitsstufen unterschiedliche Offsetwerte bereitzuhalten.

Fig. 2 kann entnommen werden, dass die zweite Drehzahl n2 für den Abgabeförderer 8 durch einen Maximalwert nmax begrenzt wird.

Es liegt demnach im Sinne der hier vorliegenden Erfindung, die zweite Drehzahl n2, mit welcher der Abgabeförderer 8 angetrieben wird, einerseits abhängig von der dritten Drehzahl n3, mit welcher die Einzugswalzen 5, 6 des Einzugswerks 4 angetrieben werden sowie andererseits abhängig von der Fahrgeschwindigkeit V der landwirtschaftlichen Erntemaschine 1 zu bestimmen.

Dies kann in Stufen oder vorzugsweise stufenlos erfolgen.

Dabei kann die Erhöhung der zweiten Drehzahl n2 abhängig von der Fahrgeschwindigkeit V linear oder auch nichtlinear erfolgen.

Das oben beschriebene Verfahren erfolgt vollautomatisch und wird vorzugsweise von einem elektronischen Steuergerät der landwirtschaftlichen Erntemaschine vollautomatisch durchgeführt. Es ist jedoch möglich, eine manuelle Feinjustierung der zweiten Drehzahl n2, mit welcher der Abgabeförderer 8 des Vorsatzgeräts 2 betrieben wird, vorzusehen. In diesem Fall hat der Fahrer die Option, den berechneten Drehzahlwert durch eine Handeingabe nach oben oder unten zu korrigieren.

Die Erfindung erlaubt einen vollautomatischen Erntebetrieb bei allen Fahrgeschwindigkeiten der landwirtschaftlichen Erntemaschine in Verbindung mit den verschiedenen Drehzahlen n3 der Einzugswalzen 5, 6, welche die jeweilige Schnittlänge bestimmen, ohne manuellen Eingriff. Es wird ein optimaler, homogener Gutfluss, ausgehend vom Vorsatzgerät 2 in die landwirtschaftliche Erntemaschine 1 hinein ermöglicht. Die Gefahr von Stopfern und Verschleiß wird reduziert.

Die Erfindung betrifft weiterhin ein Steuergerät, welches eingerichtet ist, das oben beschriebene Verfahren automatisch auszuführen. So bestimmt das Steuergerät die erste Drehzahl, mit welcher der Aufnahmeförderer 7 angetrieben wird, abhängig von der Fahrgeschwindigkeit der landwirtschaftlichen Erntemaschine. Ferner bestimmt das Steuergerät die zweite Drehzahl, mit welcher der Abgabeförderer 8 angetrieben wird, und zwar abhängig von der dritten Drehzahl, mit welcher die Einzugswalzen 5, 6 angetrieben werden sowie abhängig von der Fahrgeschwindigkeit der landwirtschaftlichen Erntemaschine 1.

Ferner betrifft die Erfindung eine landwirtschaftliche Erntemaschine mit einem erfindungsgemäßen Steuergerät. Bei der landwirtschaftlichen Erntemaschine handelt es sich insbesondere um einen Feldhäcksler, die als Vorsatzgerät ein Maisgebiss, eine Pickup oder ein Mähwerk trägt.

Beim Mähwerk, das meist auch als Direktschneidwerk bezeichnet wird, trennt eine Mäh- oder Schneideinrichtung das Erntegut in Bodennähe ab, nimmt es als Aufnahmeförderer vom Boden auf und gibt es an den Abgabeförderer, meist als Querförderschnecke ausgebildet, weiter. Die Querförderschnecke bzw. der Abgabeförderer fördert das Erntegut zur Maschinenmitte und gibt es an das Einzugswerk 4 ab. Die Mäh- oder Schneideinrichtung ist vorzugsweise in Form von mehreren nebeneinander angeordneten Mähscheiben ausgeführt.

Bei einem allgemein bekannten Maisgebiss als Vorsatzgerät trennen rotierende Mäh- und Einzugsscheiben stängelartige Pflanzen, wie beispielsweise Maisstängel, vom Boden ab, fördern diese zunächst zur Seite und nach hinten, wo diese zur Mitte des Maisgebisses gefördert werden. Die Mäh- und Einzugsscheiben sind im Zusammenhang mit der aktuellen Erfindung als Aufnahmeförderer 7 zu betrachten. Im Übergangsbereich zur Erntemaschine befinden sich wie allgemein bekannt links und rechts neben der Mitte sogenannte Einspeisetrommeln, welche die Pflanzen dem Einzugswerk 4 der Erntemaschine, insbesondere einem Feldhäcksler, zuführen und somit als Abgabeförderer 8 wirken.

### Bezugszeichenliste

- 1: landwirtschaftliche Erntemaschine
- 2: Vorsatzgerät
- 3: Häckselwerk
- 4: Einzugswerk
- 5: Einzugswalze
- 6: Einzugswalze
- 7: Aufnahmeförderer
- 8: Abgabeförderer
- 9: Gutfluss
- 10: Häckseltrommel
- 11: Riementrieb
- 12: Getriebe
- 13: Kennlinie
- 13': Kennlinie
- 13": Kennlinie
- 13‴: Kennlinie
- 13ʺʺ: Kennlinie
- V: Fahrgeschwindigkeit

## Patentansprüche

1. Verfahren zum Betreiben einer landwirtschaftlichen Erntemaschine (1),
wobei die landwirtschaftliche Erntemaschine (1) ein Vorsatzgerät (2) aufweist,
wobei das Vorsatzgerät (2) einen Aufnahmeförderer (7) aufweist, der mit einer definierten ersten Drehzahl angetrieben wird,
wobei das Vorsatzgerät (2) einen Abgabeförderer (8) aufweist, der mit einer definierten zweiten Drehzahl angetrieben wird,
wobei die Erntemaschine (1) ein Einzugswerk (4) mit Einzugswalzen (5, 6) aufweist, die mit einer definierten dritten Drehzahl angetrieben werden,
**dadurch gekennzeichnet, dass**
die zweite Drehzahl, mit welcher der Abgabeförderer (8) angetrieben wird, abhängig von der dritten Drehzahl, mit welcher die Einzugswalzen (5, 6) angetrieben werden, und ferner abhängig von der Fahrgeschwindigkeit der landwirtschaftlichen Erntemaschine (1) bestimmt wird.

2. Verfahren nach Anspruch 1, **dadurch gekennzeichnet, dass**
die zweite Drehzahl, mit welcher der Abgabeförderer (8) angetrieben wird, umso größer ist, je größer die dritte Drehzahl ist, mit welcher die Einzugswalzen (5, 6) angetrieben werden, und
die zweite Drehzahl, mit welcher der Abgabeförderer (8) angetrieben wird, umso größer ist, je größer die Fahrgeschwindigkeit der landwirtschaftlichen Erntemaschine (1) ist.

3. Verfahren nach Anspruch 1 oder 2, **dadurch gekennzeichnet, dass**
die zweite Drehzahl, mit welcher der Abgabeförderer (8) angetrieben wird, über eine von der dritten Drehzahl abhängigen Funktion oder Kennlinie (13) bestimmt wird, wobei der Funktion oder Kennlinie (13) abhängig von der Fahrgeschwindigkeit der landwirtschaftlichen Erntemaschine (1) ein Offsetwert überlagert wird.

4. Verfahren nach Anspruche 3, **dadurch gekennzeichnet, dass** der Funktion oder Kennlinie (13) ein von der Fahrgeschwindigkeit der landwirtschaftlichen Erntemaschine abhängiger Offsetwert überlagert wird.

5. Verfahren nach Anspruch 3 oder 4, **dadurch gekennzeichnet, dass** der Funktion oder Kennlinie (13) ein stufenloser Offsetwert überlagert wird.

6. Verfahren nach einem der Ansprüche 1 bis 5, **dadurch gekennzeichnet, dass** die zweite Drehzahl, mit welcher der Abgabeförderer (8) angetrieben wird, durch einen Maximalwert begrenzt wird.

7. Steuergerät einer landwirtschaftlichen Erntemaschine (1),
wobei die landwirtschaftliche Erntemaschine (1) ein Vorsatzgerät (2) aufweist,
wobei das Vorsatzgerät (2) einen Aufnahmeförderer (7) aufweist, der mit einer definierten ersten Drehzahl angetrieben wird,
wobei das Vorsatzgerät (2) einen Abgabeförderer (8) aufweist, der mit einer definierten zweiten Drehzahl angetrieben wird,
wobei die Erntemaschine ein Einzugswerk (4) mit Einzugswalzen (5, 6) aufweist, die mit einer definierten dritten Drehzahl angetrieben werden,
**dadurch gekennzeichnet, dass**
das Steuergerät die zweite Drehzahl, mit welcher der Abgabeförderer (8) angetrieben wird, abhängig von der dritten Drehzahl, mit welcher die Einzugswalzen (5, 6) angetrieben werden, und ferner abhängig von der Fahrgeschwindigkeit der landwirtschaftlichen Erntemaschine (1) bestimmt.

8. Steuergerät nach Anspruch 7, **dadurch gekennzeichnet, dass** das Steuergerät eingerichtet ist, das Verfahren nach einem der Ansprüche 1 bis 6 automatisch auszuführen.

9. Landwirtschaftliche Erntemaschine (1), mit einem Vorsatzgerät (2), und mit einem Steuergerät nach Anspruch 7 oder 8.

10. Landwirtschaftliche Erntemaschine (1) nach Anspruch 9, wobei das Vorsatzgerät (2) als Maisgebiss, als Pickup oder als Mähwerk bzw. Direktschneidwerk und die landwirtschaftliche Erntemaschine (1) als Feldhäcksler ausgebildet ist.
